# EUROPEAN PATENT APPLICATION

(11) **EP 2 562 025 A1**
(43) Date of publication of application: **27.02.2013**
(21) Application number: 12179002.6
(22) Date of filing: 02.08.2012
(51) Int. Cl.: B60K 23/08, B60K 17/35

(54) **Drive system for four-wheel drive vehicle, four-wheel drive vehicle, and control method for four-wheel drive vehicle**

(30) Priority: 23.08.2011 JP 2011181305
(71) Applicant: JTEKT CORPORATION, Osaka-shi Osaka 542-8502 (JP)
(72) Inventor: Ogawa, Tomoki, Osaka-shi,, Osaka 542-8502 (JP); Suzuki, Tomoo, Osaka-shi,, Osaka 542-8502 (JP)
(74) Representative: TBK

(57) **Abstract**

A drive system for a four-wheel drive vehicle, the drive system being mounted in a four-wheel drive vehicle that includes front wheels serving as main drive wheels and rear wheels serving as auxiliary drive wheels, includes: a propeller shaft that transmits the driving force from the engine side to the rear wheels side; a dog clutch that is able to interrupt torque transmission between the engine and the propeller shaft; a torque coupling that is able to interrupt torque transmission between the propeller shaft and the rear wheels; and an ECU that interrupts both torque transmissions by the dog clutch and the torque coupling when the vehicle speed is higher than or equal to a predetermined speed.

## Description

### BACKGROUND OF THE INVENTION

### 1. Field of the Invention

The invention relates to a drive system for a four-wheel drive vehicle, a four-wheel drive vehicle, and a control method for a four-wheel drive vehicle.

### 2. Description of Related Art

For example, Japanese Patent Application Publication No. 2010-25170 (JP 2010-25170 A) describes a conventional four-wheel drive vehicle in which torque transmission at the input side and the output side of a propeller shaft is interrupted to prevent rotation of the propeller shaft while the vehicle is travelling in a two-wheel drive mode. This configuration is employed in order to improve fuel efficiency by reducing power loss due to rotation of the propeller shaft in the two-wheel drive mode.

The four-wheel drive vehicle described in JP 2010-25170 A includes a torque coupling, a driving force interrupting device, and an electronic control unit (ECU). The torque coupling allows or interrupts torque transmission at the input side (engine side) of the propeller shaft. The driving force interrupting device allows or interrupts torque transmission at the output side (auxiliary drive wheel side) of the propeller shaft. The ECU controls the torque coupling and the driving force interrupting device.

The ECU controls the torque transmission capacity of the torque coupling on the basis of a vehicle speed, a wheel speed difference between front wheels and rear wheels, and a throttle position. The ECU interrupts torque transmissions by the torque coupling and the driving force interrupting device in the two-wheel drive mode in which engine torque is transmitted only to main drive wheels.

The diameter and the wall thickness of the propeller shaft or the number of joints of the propeller shaft are set such that the propeller shaft withstands a rotation speed even when the vehicle travels at its maximum speed. Therefore, there are limitations to reduction in weight of the propeller shaft and reduction in space for the propeller shaft.

### SUMMARY OF THE INVENTION

It is an object of the invention to provide a drive system for a four-wheel drive vehicle, a four-wheel drive vehicle, and a control method for a four-wheel drive vehicle, which allow weight reduction of a propeller shaft, thereby further improving fuel efficiency.

An aspect of the invention relates to a drive system for a four-wheel drive vehicle, the drive system being mounted in a four-wheel drive vehicle that includes main drive wheels to which driving force of a driving source is constantly transmitted and auxiliary drive wheels to which the driving force of the driving source is transmitted depending on a travelling state. The drive system includes: a propeller shaft that transmits the driving force from the driving source side to the auxiliary drive wheels side; a first interrupting device that is able to interrupt torque transmission between the driving source and the propeller shaft; a second interrupting device that is able to interrupt torque transmission between the propeller shaft and the auxiliary drive wheels; and a control unit that interrupts both torque transmission by the first interrupting device and toque transmission by the second interrupting device when a vehicle speed of the four-wheel drive vehicle is higher than or equal to a predetermined speed.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view for schematically illustrating a four-wheel drive vehicle in which a drive system according to an embodiment of the invention is mounted;
FIG. 2A and FIG. 2B are sectional views for illustrating main portions of a dog clutch according to the embodiment of the invention;
FIG. 3 is a sectional view for illustrating main portions of a torque coupling according to the embodiment of the invention; and
FIG. 4 is a view that illustrates a propeller shaft according to the embodiment of the invention.

### DETAILED DESCRIPTION OF EMBODIMENTS

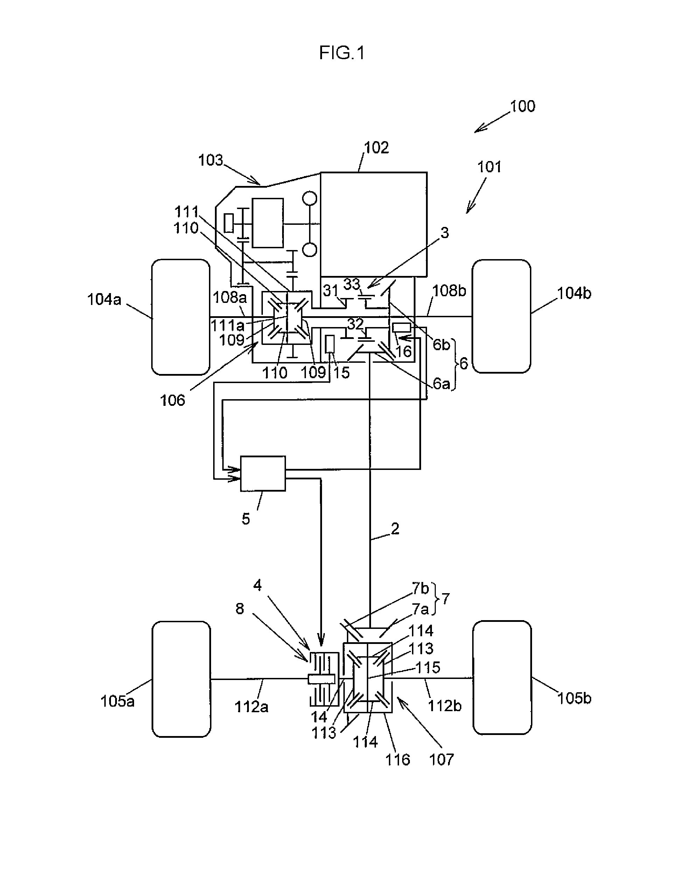

FIG. 1 shows an example of the schematic configuration of a four-wheel drive vehicle. As shown in FIG. 1, a four-wheel drive vehicle 100 includes an engine 102, a transmission 103, a pair of front wheels 104a, 104b, a pair of rear wheels 105a, 105b, a driving force transmission system 101, and an ECU 5. The engine 102 may function as a driving source. The front wheels 104a, 104b may function as main drive wheels. The rear wheels 105a, 105b may function as auxiliary drive wheels. The ECU 5 may function as a control unit.

The driving force transmission system 101 includes a front differential 106, a dog clutch 3, a propeller shaft 2, a rear differential 107, a torque coupling 4, right and left front-wheel axle shafts 108b, 108a, and right and left rear-wheel axle shafts 112b, 112a. The driving force transmission system 101 is configured to transmit the driving force of the engine 102 to the front wheels 104a, 104b and the rear wheels 105a, 105b.

The operations of the dog clutch 3 and the torque coupling 4 are controlled by the ECU 5. The dog clutch 3 is an example of a first interrupting device that is able to interrupt torque transmission between the engine 102 and the propeller shaft 2. The torque coupling 4 is an example of a second interrupting device that is able to interrupt torque transmission between the propeller shaft 2 and the rear wheels 105a, 105b.

The front differential 106 includes a pair of side gears 109, a pair of pinion gears 110, a pinion gear support member 111a, and a front differential case 111. The side gears 109 are coupled to the front-wheel axle shafts 108a, 108b. The pinion gears 110 are in mesh with the side gears 109 with their gear axes extending perpendicularly to the gear axes of the side gears 109. The pinion gear support member 111a supports the pinion gears 110. The front differential case 111 accommodates the side gears 109, the pinion gears 110, and the pinion gear support member 111a.

The rear differential 107 includes a pair of pinion gears 114, a pinion gear support member 115, and a rear differential case 116. The rear differential 107 is arranged between the propeller shaft 2 and the torque coupling 4. The pinion gears 114 are in mesh with the side gears 113 with their gear axes extending perpendicularly to the gear axes of the side gears 113. The pinion gear support member 115 supports the pinion gears 114. The rear differential case 116 accommodates the side gears 113, the pinion gears 114, and the pinion gear support member 115.

A side gear shaft 14 is coupled to the left side gear 113, which is one of the side gears 113, such that relative rotation between the side gear shaft 14 and the left side gear 113 is prohibited. In addition, the right rear-wheel axle shaft 112b is coupled to the right side gear 113, which is the other one of the side gears 113, such that relative rotation between the right rear-wheel axle shaft 112b and the right side gear 113 is prohibited.

The engine 102 outputs driving force to the front-wheel axle shafts 108a, 108b via the transmission 103 and the front differential 106, thereby driving the front wheels 104a, 104b.

The engine 102 outputs driving force to the left rear-wheel axle shaft 112a via the transmission 103, the dog clutch 3, the propeller shaft 2, the rear differential 107, the side gear shaft 14, and the torque coupling 4, thereby driving the left rear wheel 105a. In addition, the engine 102 outputs driving force to the right rear-wheel axle shaft 112b via the transmission 103, the dog clutch 3, the propeller shaft 2, and the rear differential 107, thereby driving the right rear wheel 105b.

The propeller shaft 2 is arranged between the dog clutch 3 and the rear differential 107. The propeller shaft 2 is configured to receive the torque of the engine 102 from the front differential case 111, which is a rotary member, and then transmit the torque from the front wheels 104a, 104b-side to the rear wheels 105a, 105b-side. A front wheel-side gear mechanism 6 is arranged at the front wheel-side end portion of the propeller shaft 2. The front wheel-side gear mechanism 6 is formed of a drive pinion 6a and a ring gear 6b that are in mesh with each other. A rear wheel-side gear mechanism 7 is arranged at the rear wheel-side end portion of the propeller shaft 2. The rear-wheel side gear mechanism 7 is formed of a drive pinion 7a and a ring gear 7b that are in mesh with each other.

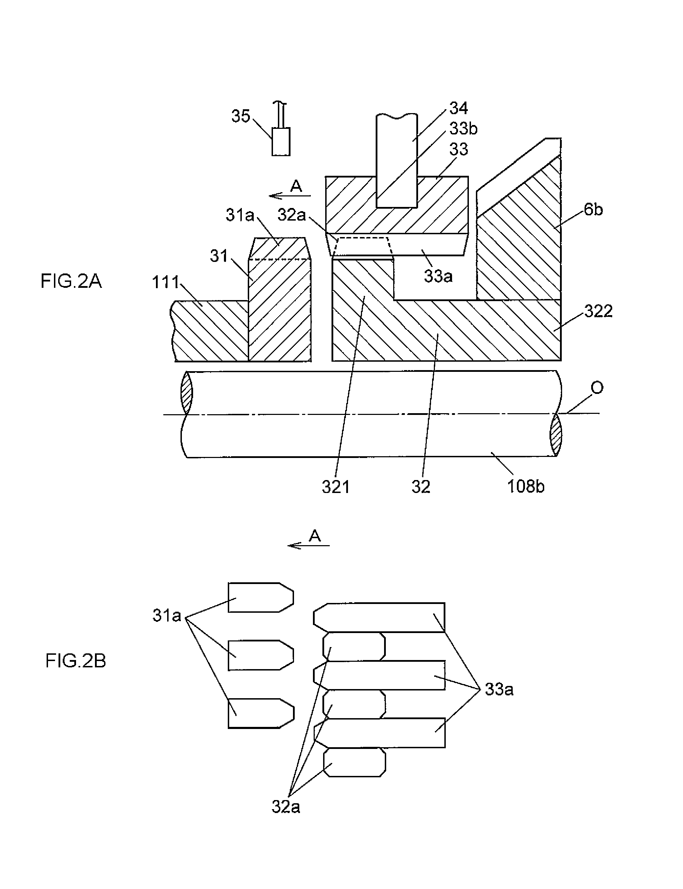

FIG. 2A is a sectional view that shows an example of the schematic configuration of the dog clutch 3. The dog clutch 3 includes a first rotary member 31, a second rotary member 32, and a sleeve 33. The first rotary member 31 is fixed to an axial end portion of the front differential case 111. The second rotary member 32 is arranged coaxially with the first rotary member 31 so as to be rotatable relative to the first rotary member 31. The sleeve 33 is movable in the axial direction on the outer peripheral side of the first rotary member 31 and second rotary member 32.

The first rotary member 31 is an annular member through which the front-wheel axle shaft 108b is passed. The first rotary member 31 is fixed to the end portion of the front differential case 111 by, for example, bolt tightening, and rotates together with the front differential case 111. A plurality of meshing teeth 31a is formed at the outer periphery of the first rotary member 31.

The second rotary member 32 is a cylindrical member formed such that one axial end portion 321, which faces the first rotary member 31, is larger in outer diameter than the remaining portion. The front-wheel axle shaft 108b passes through the center portion of the second rotary member 32. A plurality of meshing teeth 32a is formed at the outer periphery of the end portion 321 of the first rotary member 31. The ring gear 6b is fixed to the outer periphery of the other axial end portion 322 of the second rotary member 32 by, for example, bolt tightening, such that relative rotation between the second rotary member 32 and the ring gear 6b is prohibited.

The second rotary member 32 and the front differential case 111 are supported by bearings (not shown) so as to be rotatable independently from each other and axially immovable relative to a vehicle body.

The sleeve 33 has an annular shape, and has a plurality of meshing teeth 33a at its inner periphery. The meshing teeth 33a are constantly in mesh with the meshing teeth 32a of the second rotary member 32, and are allowed to be in mesh with the meshing teeth 31a of the first rotary member 31 through axial movement along the rotation axis O of the front-wheel axle shaft 108b. In addition, an annular groove 33b is formed in the outer periphery of the sleeve 33, and a fork 34 is slidably fitted in the groove 33b. The fork 34 is advanced in the direction of an arrow A, and is retracted in the direction opposite to the direction of the arrow A together with the sleeve 33 by an actuator (not shown). In addition, a proximity sensor 35 that detects the position of the sleeve 33 is arranged radially outward of the first rotary member 31.

FIG. 2B is a schematic view that shows an example of a state of mesh between the meshing teeth 31a of the first rotary member 31 and the meshing teeth 32a of the second rotary member 32, and the meshing teeth 33a of the sleeve 33. In the state shown in FIG. 2B, the meshing teeth 32a of the second rotary member 32 are in mesh with the meshing teeth 33a of the sleeve 33, but the meshing teeth 31a of the first rotary member 31 are not in mesh with the meshing teeth 33a of the sleeve 33. Therefore, the dog clutch 3 is placed in a disengaged state where relative rotation between the first rotary member 31 and the second rotary member 32 is allowed, and torque transmission between the front differential case 111 and the propeller shaft 2 is interrupted.

In addition, when the sleeve 33 moves in the direction of the arrow A from this state, the meshing teeth 33a of the sleeve 33 enter spaces between the meshing teeth 31a of the first rotary member 31, and the dog clutch 3 is placed in an engaged state where the meshing teeth 31a are in mesh with the meshing teeth 33a. In the engaged state, the meshing teeth 33a of the sleeve 33 are in mesh with both the meshing teeth 31a of the first rotary member 31 and the meshing teeth 32a of the second rotary member 32, and therefore relative rotation between the first rotary member 31 and the second rotary member 32 is prohibited. Thus, the front differential case 111 is coupled to the propeller shaft 2 such that torque is transmittable therebetween. When the sleeve 33 is retracted in the direction opposite to the direction of the arrow A by the fork 34, the torque transmission between the front differential case 111 and the propeller shaft 2 is interrupted.

When the sleeve 33 is moved in the direction of the arrow A so that the first rotary member 31 is coupled to the second rotary member 32 by the sleeve 33, the rotation of the first rotary member 31 needs to be synchronized with the rotation of the second rotary member 32. The ECU 5 detects the rotation speed of the first rotary member 31 with the use of a rotation sensor 15 (shown in FIG. 1), and detects the rotation speed of the second rotary member 32 with the use of a rotation sensor 16 (shown in FIG. 1). When a difference between the rotation speeds is smaller than or equal to a predetermined threshold, the ECU 5 causes the sleeve 33 to move in the direction of the arrow A.

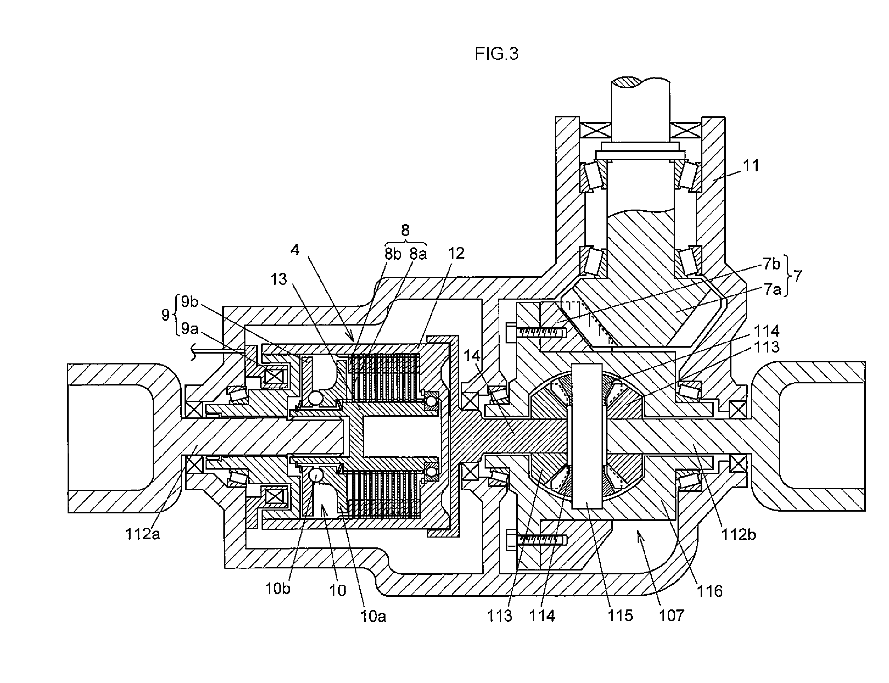

FIG. 3 shows an example of the configuration of the torque coupling 4 and its peripheral portions. As shown in FIG. 3, the torque coupling 4 includes a multiple-disc clutch 8, an electromagnetic clutch 9, and a cam mechanism 10. The torque coupling 4 is accommodated in a differential carrier 11 together with the rear differential 107 and the gear mechanism 7, and is arranged on the left rear wheel 105a-side in the four-wheel drive vehicle 101.

The torque coupling 4 is configured to be able to adjust torque transmitted between the side gear shaft 14 and the left rear-wheel axle shaft 112a.

That is, in a coupling state achieved by the torque coupling 4, the left rear-wheel axle shaft 112a is coupled to the propeller shaft 2 via the gear mechanism 7, the rear differential 107, and the side gear shaft 14 such that torque is transmittable therebetween, and the right rear-wheel axle shaft 112b is coupled to the propeller shaft 2 via the gear mechanism 7 and the rear differential 107 such that torque is transmittable therebetween.

On the other hand, when torque transmission by the torque coupling 4 is interrupted and the side gear shaft 14 is released from the left rear-wheel axle shaft 112a, torque from the propeller shaft 2 is no longer transmitted to the left rear-wheel axle shaft 112a. Accordingly, torque from the propeller shaft 2 is no longer transmitted to the right rear-wheel axle shaft 112b. Note that, torque is no longer transmitted to the right rear-wheel axle shaft 112b as well, due to the general characteristic of a differential unit that when one of the side gears idles, torque is no longer transmitted to the other one of the side gears.

The multiple-disc clutch 8 is arranged between a housing 12 having an accommodating space therein and a cylindrical inner shaft 13. The multiple-disc clutch 8 is formed of inner clutch plates 8a and outer clutch plates 8b. The inner clutch plates 8a are spline-engaged with the inner shaft 13 so that relative rotation between the inner clutch plates 8a and the inner shaft 13 is prohibited. The outer clutch plates 8b are spline-engaged with the housing 12 such that relative rotation between the outer clutch plates 8b and the housing 12 is prohibited.

The housing 12 is coupled to the side gear shaft 14 by, for example, spline-fitting such that relative rotation between the housing 12 and the side gear shaft 14 is prohibited. The housing 12 is supported such that relative rotation between the housing 12 and the left rear-wheel axle shaft 112a about the axis of the left rear-wheel axle shaft 112a is allowed. The inner shaft 13 is arranged in the accommodating space of the housing 12, and is coupled to the left rear-wheel axle shaft 112a by, for example, spline-fitting such that relative rotation between the inner shaft 13 and the left rear-wheel axle shaft 112a is prohibited.

The electromagnetic clutch 9 has a coil 9a and an armature cam 9b, and is arranged along the rotation axis of the housing 12. The electromagnetic clutch 9 moves the armature cam 9b toward the coil 9a by electromagnetic force generated by the coil 9a to thereby couple the armature cam 9b to the housing 12.

The cam mechanism 10 includes the armature cam 9b, which serves as a cam member, and has a main cam 10a and a cam follower 10b. The main cam 10a is arranged next to the armature cam 9b along the rotation axis of the housing 5. The cam follower 10b is interposed between the main cam 10a and the armature cam 9b. The cam mechanism 10 is accommodated in the housing 12. In the cam mechanism 10, the armature cam 9b receives rotational force from the housing 12 upon energization of the coil 9a and converts the rotational force into pushing force that is used as clutch force of the multiple-disc clutch 8. As the amount of current supplied to the coil 9a increases, friction force between the armature cam 9b and the housing 12 increases, and the main cam 10a further strongly pushes the multiple-disc clutch 8. That is, force for pushing the multiple-disc clutch 8 is controllable in accordance with the amount of current supplied to the coil 9a, and the torque coupling 4 is able to adjust torque transmitted between the propeller shaft 2 and the rear wheels 105a, 105b.

The ECU 5 outputs signals for activating the dog clutch 3 and the torque coupling 4 to control the dog clutch 3 and the torque coupling 4. In addition, the ECU 5 is able to acquire information such as the vehicle speed of the four-wheel drive vehicle 100, the rotation speeds of the front wheels 104a, 104b and rear wheels 105a, 105b, the output torque of the engine 102, and the steering angle via an in-vehicle communication network, such as a controller area network (CAN).

Then, the ECU 5 computes a command torque that should be transmitted to the rear wheels 105a, 105b on the basis of the acquired various information, and controls the dog clutch 3 and the torque coupling 4 such that torque that corresponds to the command torque is transmitted to the rear wheels 105a, 105b.

For example, when the rotation speed difference between the front wheels 104a, 104b and the rear wheels 105a, 105b is large, the ECU 5 controls the dog clutch 3 and the torque coupling 4 so as to increase torque transmitted to the rear wheels 105a, 105b. Thus, for example, when the front wheels 104a, 104b skid, the drive mode is brought closer to the four-wheel drive mode. As a result, the front wheels 104a, 104b stop skidding. In addition, the ECU 5 controls the dog clutch 3 and the torque coupling 4 so as to increase torque transmitted to the rear wheels 105a, 105b with an increase in the output torque of the engine 102. Thus, skids due to transmission of excessive torque to the front wheels 104a, 104b is obviated.

Furthermore, the ECU 5 according to the present embodiment has the following feature. When the vehicle speed of the four-wheel drive vehicle 100, detected by the ECU 5, is higher than or equal to a predetermined speed, the ECU 5 executes control so as to interrupt torque transmission between the front differential case 111 and the propeller shaft 2 by the dog clutch 3 and interrupt torque transmission between the left rear-wheel axle shaft 112a and the side gear 113 by the torque coupling 4 (multiple-disc clutch 8). Thus, because torque transmission is interrupted at the upstream side and the downstream side in the torque transmission direction in the driving force transmission system 101, the propeller shaft 2 does not rotate even when the four-wheel drive vehicle 100 is travelling.

That is, the ECU 5 executes control so as to reliably interrupt torque transmissions by the dog clutch 3 and the torque coupling 4 when the vehicle speed is higher than or equal to the predetermined speed, irrespective of the rotation speed difference between the front wheels 104a, 104b and the rear wheels 105a, 105b, the output torque of the engine 102, the steering angle, and the like. Therefore, when the vehicle speed is higher than or equal to the predetermined speed, the propeller shaft 2 does not rotate even when the four-wheel drive vehicle 100 is travelling.

With such a control method, the upper limit of the rotation speed of the propeller shaft 2 is suppressed. Therefore, it is possible to make the weight of the propeller shaft 2 lower than that when the above-described control is not executed. That is, when the four-wheel drive vehicle is able to travel at, for example, 220 km per hour, the conventional control method requires a high stiffness of the propeller shaft so as not to cause an abnormality in the propeller shaft even when the vehicle travels at the maximum speed. However, with the control method according to the present embodiment, because the upper limit of the rotation speed of the propeller shaft 2 is suppressed, it is possible to reduce, for example, the diameter of the propeller shaft 2.

The predetermined speed is desirably set at 100 to 130 km per hour. When the predetermined speed is set lower than 100 km per hour, control for interrupting torque transmissions by the dog clutch 3 and the torque coupling 4 may be frequently executed, for example, while the vehicle is travelling on an expressway. This is not desirable. On the other hand, when the predetermined speed is set at a value exceeding 130 km per hour, the effect of reducing the size and weight of the propeller shaft, which is obtained by the control method, is insufficient. This is also not desirable.

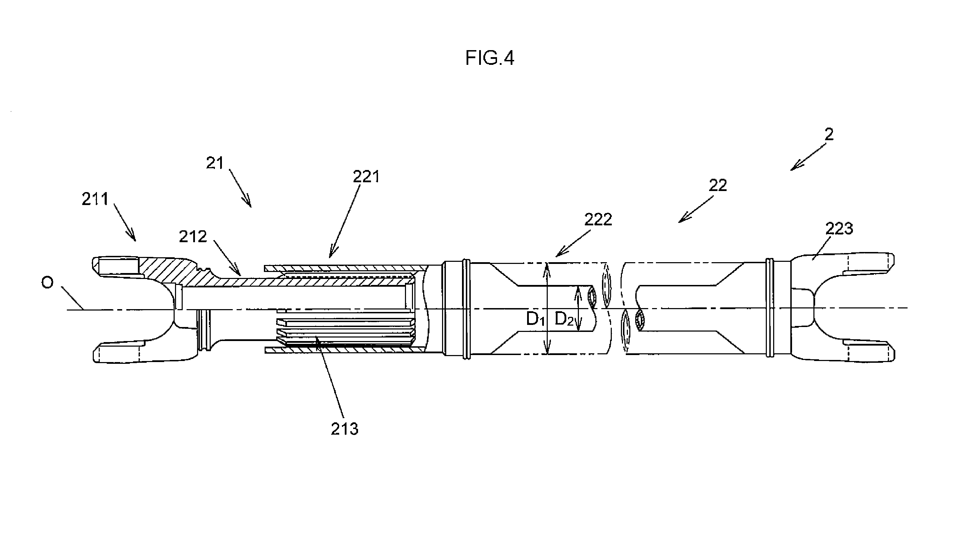

FIG. 4 is a view that illustrates the outer shape that the propeller shaft is required to have in order to withstand travelling at 220 km per hour, which is indicated by the long dashed double-short dashed line, and the outer shape that the propeller shaft is required to have in order to withstand travelling at 120 km per hour, which is indicated by the continuous line. FIG. 4 illustrates these outer shapes of the propeller shafts in order to show the results of evaluation of the degree of the effect that is obtained when the diameter of the propeller shaft 2 is reduced by employing the control method according to the present embodiment.

The propeller shaft 2 has a first shaft portion 21 and a second shaft portion 22. A spline-fitting portion 213 of the first shaft portion 21 is spline-fitted to a spline-fitting portion 221 of the second shaft portion 22. Thus, the first shaft portion 21 and the second shaft portion 22 are movable relative to each other along the direction of the rotation axis O, and relative rotation between the first shaft portion 21 and the second shaft portion 22 is prohibited.

The first shaft portion 21 has a yoke 211, the spline-fitting portion 213 and a shaft portion 212. The yoke 211 is coupled to another rotary member by, for example, a cross joint. The shaft portion 212 is provided between the yoke 211 and the spline-fitting portion 213. The second shaft portion 22 has the spline-fitting portion 221, a yoke 223, and a hollow cylindrical portion 222. The cylindrical portion 222 is formed between the spline-fitting portion 221 and the yoke 223. In the example shown in FIG. 4, among the portions of the first shaft portion 21 and second shaft portion 22, the cylindrical portion 222 of the second shaft portion 22, which has the longest axial length, has the smallest diameter.

In the evaluation results shown in FIG. 4, when the case where the propeller shaft is required to withstand travelling at 120 km per hour is compared with the case where the propeller shaft is required to withstand travelling at 220 km per hour, the diameter of the cylindrical portion 222 reduces from D₁ (D₁ = 82.6 mm) to D₂ (D₂ = 42 mm). Therefore, the diameter of the cylindrical portion 222 is reduced to approximately half, and the weight of the propeller shaft 2 is also reduced to approximately half. Note that the wall thickness of the cylindrical portion 222 in each case is set at 1.8 mm.

If the propeller shaft 2 is prevented from rotating when the vehicle speed is higher than or equal to the predetermined speed as described above, the size or the wall thickness of the propeller shaft 2 is reduced. This makes it possible to reduce the weight of the propeller shaft 2. In addition, when joints are provided between both end portions (between the gear mechanism 6 and the gear mechanism 7) of the propeller shaft 2, the number of the joints is reduced.

In addition, in the present embodiment, a vehicle speed conversion permissible value of the rotation speed of the propeller shaft 2, which is obtained by converting a permissible value of the rotation speed of the propeller shaft 2 into a vehicle speed, is set lower than a vehicle speed conversion permissible value of the rotation speed of each of the front differential 106, the dog clutch 3, the rear differential 107, the torque coupling 4, the front-wheel axle shafts 108a, 108b and the rear-wheel axle shafts 112a, 112b that constitute the driving force transmission system 101.

Note that, the vehicle speed conversion permissible value is set to such a value that when the four-wheel drive vehicle 100 travels at a speed higher than or equal to the vehicle speed conversion permissible value, some abnormalities, such as excessive vibrations, may occur in a corresponding member or device. The vehicle speed conversion permissible value is determined based on the stiffness, and the like, of the corresponding member or device. For example, when the vehicle speed conversion permissible value of a given member is 150 km per hour, it is guaranteed that no abnormality occurs in the given member if the vehicle speed is lower than or equal to 150 km per hour.

The members, and the like, that constitute the driving force transmission system 101 have different reduction gear ratios with respect to rotation of the output shaft of the transmission 103. Therefore, it is not possible to compare the permissible values at the time of usage with each other, by directly using the number of revolutions per hour (rotation speed) of each of the members, and the like. Therefore, the permissible values converted into the vehicle speeds are compared with each other.

Therefore, when the vehicle speed conversion permissible value of the rotation speed of the propeller shaft 2, which is obtained by converting the permissible value of the rotation speed of the propeller shaft 2 into a vehicle speed, is lower than the vehicle speed conversion permissible values of the other members, and the like, that constitute the driving force transmission system 101, some abnormalities initially will occur in the propeller shaft 2 as the vehicle speed increases, unless control for interrupting torque transmissions by the dog clutch 3 and the torque coupling 4 is executed.

However, such an abnormality of the propeller shaft 2 during high-speed travelling is avoided through control for interrupting torque transmissions by the dog clutch 3 and the torque coupling 4 when the vehicle speed is higher than or equal to the predetermined speed. Thus, even when the four-wheel drive vehicle 100 travels at a vehicle speed that exceeds the permissible value of the rotation speed of the propeller shaft 2, the vehicle is able to stably travel without occurrence of an abnormality in the propeller shaft 2.

The driving system and the four-wheel drive vehicle according to the invention are described on the basis of the above-described embodiment. However, the invention is not limited to the embodiment described above. The invention may be implemented in various other embodiments without departing from the scope of the invention.

For example, in the above-described embodiment, the dog clutch 3 is arranged at one end of the propeller shaft 2, which is close to the engine 102, and the torque coupling 4 is arranged at the other end of the propeller shaft 2, which is close to the rear wheels 105a, 105b. However, the invention is not limited to this configuration. The torque coupling 4 may be arranged at one end of the propeller shaft 2, which is close to the engine 102, and the dog clutch 3 may be arranged at the other end of the propeller shaft 2, which is close to the rear wheels 105a, 105b.

In the above-described embodiment, the front wheels 104a, 104b function as the main drive wheels, and the rear wheels 105a, 105b function as the auxiliary drive wheels. However, the invention is not limited to this configuration. The invention may also be applied to a four-wheel drive vehicle in which the front wheels 104a, 104b function as auxiliary drive wheels and the rear wheels 105a, 105b function as main drive wheels.

According to the invention, it is possible to reduce the weight of the propeller shaft, thereby further improving fuel efficiency.
A drive system for a four-wheel drive vehicle, the drive system being mounted in a four-wheel drive vehicle that includes front wheels serving as main drive wheels and rear wheels serving as auxiliary drive wheels, includes: a propeller shaft that transmits the driving force from the engine side to the rear wheels side; a dog clutch that is able to interrupt torque transmission between the engine and the propeller shaft; a torque coupling that is able to interrupt torque transmission between the propeller shaft and the rear wheels; and an ECU that interrupts both torque transmissions by the dog clutch and the torque coupling when the vehicle speed is higher than or equal to a predetermined speed.

## Claims

1. A drive system for a four-wheel drive vehicle, the drive system being mounted in a four-wheel drive vehicle that includes main drive wheels to which driving force of a driving source is constantly transmitted and auxiliary drive wheels to which the driving force of the driving source is transmitted depending on a travelling state, comprising:
a propeller shaft that transmits the driving force from the driving source side to the auxiliary drive wheels side;
a first interrupting device that is able to interrupt torque transmission between the driving source and the propeller shaft;
a second interrupting device that is able to interrupt torque transmission between the propeller shaft and the auxiliary drive wheels; and
a control unit that interrupts both torque transmission by the first interrupting device and toque transmission by the second interrupting device when a vehicle speed of the four-wheel drive vehicle is higher than or equal to a predetermined speed.

2. The drive system according to claim 1, wherein
a vehicle speed conversion permissible value of a rotation speed of the propeller shaft, which is obtained by converting a permissible value of the rotation speed of the propeller shaft into a vehicle speed, is set lower than a vehicle speed conversion permissible value of a rotation speed of any other component of a driving force transmission system that transmits the driving force of the driving source to the main drive wheels and the auxiliary drive wheels.

3. A four-wheel drive vehicle, comprising:
a driving source;
main drive wheels to which driving force of the driving source is constantly transmitted;
auxiliary drive wheels to which the driving force of the driving source is transmitted depending on a travelling state;
a propeller shaft that transmits the driving force from the driving source side to the auxiliary drive wheels side;
a first interrupting device that is able to interrupt torque transmission between the driving source and the propeller shaft;
a second interrupting device that is able to interrupt torque transmission between the propeller shaft and the auxiliary drive wheels; and
a control unit that interrupts both torque transmission by the first interrupting device and toque transmission by the second interrupting device when a vehicle speed of the four-wheel drive vehicle is higher than or equal to a predetermined speed.

4. A control method for a four-wheel drive vehicle that includes:
main drive wheels to which driving force of a driving source is constantly transmitted;
auxiliary drive wheels to which the driving force of the driving source is transmitted depending on a travelling state;
a propeller shaft that transmits the driving force from the driving source side to the auxiliary drive wheels side;
a first interrupting device that is able to interrupt torque transmission between the driving source and the propeller shaft; and
a second interrupting device that is able to interrupt torque transmission between the propeller shaft and the auxiliary drive wheels,
the control method comprising:
interrupting both torque transmission by the first interrupting device and toque transmission by the second interrupting device when a vehicle speed of the four-wheel drive vehicle is higher than or equal to a predetermined speed.
